# EUROPÄISCHE PATENTSCHRIFT

(11) **EP 0 794 878 B1**
(45) Veröffentlichungstag und Bekanntmachung des Hinweises auf die Patenterteilung: **10.06.1998**
(21) Anmeldenummer: 95913034.5
(22) Anmeldetag: 16.03.1995
(51) Int. Cl.: B60N 2/24

(54) **SITZ, INSBESONDERE FAHRZEUGSITZ FÜR ÖFFENTLICHE VERKEHRSMITTEL**
SEAT, IN PARTICULAR A SEAT FOR PUBLIC-TRANSPORT VEHICLES
SIEGE, NOTAMMENT SIEGE POUR VEHICULES DE TRANSPORTS PUBLICS

(30) Priorität: 30.11.1994 DE 4442588
(43) Veröffentlichungstag der Anmeldung: 17.09.1997
(73) Patentinhaber: FAHRZEUGSITZE BAD SCHANDAU GMBH, 01814 Bad Schandau (DE)
(72) Erfinder: MARCHESI, Paolo, I-36100 Asiago (IT); BAUCH, Lutz, D-01326 Dresden (DE); SCHÖNFELDER, Christian, D-01824 Königstein (DE)
(74) Vertreter: Hofmann, Klaus
(86) Internationale Anmeldenummer: DE9500371
(87) Internationale Veröffentlichungsnummer: WO9616833

(56) Entgegenhaltungen:
- EP-A- 0 167 680
- EP-A- 0 330 594
- FR-A- 2 306 659
- US-A- 3 101 218
- US-A- 3 797 887

## Beschreibung

Die Erfindung betrifft einen Sitz, welcher insbesondere als Fahrzeugsitz für öffentliche Verkehrsmittel einsetzbar ist.

Bei der Darstellung eines Fahrzeugsitzes für moderne schienengebundene Verkehrsmittel müssen die zum Teil recht hohen Betriebsbeanspruchungen in einer Struktur aufgenommen werden, die bei minimaler Masse ein hohes Maß an Fahrkomfort realisiert. Gleichzeitig muß sie sich wirtschaftlich herstellen lassen.

Jetzt gebräuchliche Fahrzeugsitze werden gekennzeichnet durch eine Vielzahl von Bauteilen, z.B. einem Hilfsgestell zur Aufnahme von Sitz- und Rückenlehnenkomponenten sowie von Armlehnen und Kopfstützen und einer Vielzahl verschiedener Abdeckungen.

Es ist bekannt, einen kraftaufnehmenden Rohrrahmen oder Rahmenteile aus Metallguß bzw. aus verformten Blechen mit gezogenen Metallschalen oder laminierten Kunststoffbauteilen so zu verbinden, daS die Kräfte, mit denen die Sitz- und Lehnenkomponenten über die Polsterteile beauflagt werden, auf die Stützfüße und über diese in die Fahrzeugstruktur abgeleitet werden (DE OS 29 28 852, DE OS 33 28 825, DE OS 28 07 023, DE OS 32 03 670). Für die Befestigung der Armlehnen und der Kopfstütze sind weitere Hilfsrahmen üblich.

Weiter ist bekannt, einen Sitz so zu gestalten, daß eine Sandwichschale auf einem Hilfsrahmen (DE OS 38 11 939) die Kräfte ableitet. Auch für die Polsterbefestigung sind verschiedene Lösungen bekannt (DE OS 42 14 510).

In der gattungsbildenden EP-A-0 330 594 wird ein Fahrzeugsitz beschrieben, dessen Gestell durch einen einzigen Hauptträger gebildet wird. Dieser Hauptträger ist das einzige durchgängige Element, welches aus extrudierten Metallprofilen besteht und alle Kräfte aufnehmen muß. An diesen Hauptträger sind für jeden Sitz getrennt ein vorderes Sitzflächenelement und ein hinteres Sitzflächenelement, welche zusammen die Sitzfläche bilden, vorgesehen. Außerdem ist für jeden Einzelsitz ein Auskleidungsblech und ein Kopfauflagenquerträger vorgesehen, wobei der Kopfauflagenquerträger jeweils mehrere Eckstücke und Seitenelemente besitzt. Da außer dem Hauptträger keine Teile durchgängig ausgebildet sind, müssen zusätzliche Seitenversteifungen angebracht werden. Durch die geringe Steifigkeit des vorderen Sitzflächenelementes, des hinteren Sitzflächenelementes und insbesondere des Auskleidungsbleches ist auch die Breite eines Sitzes bzw. einer Bank begrenzt. Die zusätzlichen seitlichen Versteifungen sind auch deshalb erforderlich, da daran die Armlehnenelemente aufgenommen werden müssen. Das Rückenteil, welches lediglich aus einem dünnen Blech besteht, wäre dazu allein nicht in der Lage.

Diesen Lösungen ist die große Anzahl unterschiedlicher Strukturelemente gemeinsam. Durch die in der Regel angewendeten Konstruktionsprinzipien und die daraus resultierenden Herstellungsverfahren bedingt, werden die Elemente meist als Einzelteile hergestellt, d.h. zur Realisierung anderer Sitze mit unterschiedlicher Komfortstufe können sie nur begrenzt eingesetzt werden. Die Aneinanderreihung von Einzelsitzen zum Mehrfachsitz ist nur über ein Untergestell möglich. Dieses Untergestell bedeutet zusätzlichen Herstellungsaufwand und eine Einschränkung der Fahrgäste im Fußbereich. Ungünstig ist auch die Reinigung von Fahrzeugen mit derartigen Untergestellen.

Der Erfindung liegt die Aufgabe zugrunde, einen Sitz ohne die genannten Nachteile herkömmlicher Bauart zu entwickeln, insbesondere einen Fahrzeugsitz, mit dem Konstruktionselemente eingespart werden und der in verschiedenen Abmessungen und Ausstattungen universell und dabei wirtschaftlich günstig herstellbar ist.

Erfindungsgemäß wird die Aufgabe durch einen Sitz nach Anspruch 1 gelöst. Weitere ausgestaltende Merkmale sind in den Ansprüchen 2 bis 5 beschrieben.

Die Erfindung beschreibt einen Sitz, dessen Sitzmodul infolge seiner Konstruktion als selbsttragender Hohlkörper viele einzelne, bisher übliche, Bauteile integriert und damit in der Lage ist, mit einer minimalen Anzahl an Bauelementen Armlehnen, Kopfstützen und Haltegriffe aufzunehmen.

Das Sitzmodul bildet den Grundkörper für das Sitz- und Lehnensegment. Hinsichtlich einer wirtschaftlichen Fertigung ist es für Sitze mit unterschiedlichen Komfortstufen in variablen Abmessungen einsetzbar.

Nachfolgend wird die Erfindung an einem Ausführungsbeispiel näher erläutert. Es zeigen:
- Fig. 1 -: Sitzmodul mit integriertem Hilfsrahmen, Sitz- und Rückenlehnenträger sowie Untergestellelemente
- Fig. 2 -: Armlehnenbefestigung
- Fig. 3 -: Kopfstützen- oder Handgriffbefestigung
- Fig. 4 -: Polsterteilbefestigung

Für den im Schienenfahrzeugbereich im allgemeinen geltenden Belastungsbereich beschreibt die Erfindung an Hand eines Ausführungsbeispieles einen als Einrichtungsdoppelsitz erster Klasse einsetzbaren Fahrzeugsitz, dessen Sitzmodul 1 bei den hier erforderlichen Abmessungen, außer mit zwei seitlichen Abstützungen (Sitzfüßen), ohne zusätzliche Hilfsrahmen oder Stützelemente verwendet wird.

Die Festigkeitswerte, nach denen das Sitzmodul ausgelegt ist, sind so gewählt, das Sitze mit geringerer Sitzbreite, d.h. kleinerer Stützweite des Sitzmoduls, eingeschlossen werden. Die gezeigte Lösung beinhaltet bezüglich der Beanspruchung das in der Regel benötigte Maßspektrum bei der Ausrüstung von Schienenfahrzeugen.
Darüberhinaus können Teile des Sitzmoduls als Grundelemente für Einzelsitze unterschiedlicher Komfortstufen dienen, indem lediglich die Form des Polsterteiles variiert wird.

Durch die Verwendung von Strangpress- bzw. Extrusionsprofilen besteht bei der vorgeschlagenen Lösung die Möglichkeit, innerhalb des oben beschriebenen Maßspektrums jedes beliebige Breitenmaß zu realisieren. Die Herstellung verschiedener, nicht austauschbarer Elemente zur Darstellung verschiedener Sitzbreiten entfällt.

Die beschriebenen Profile bilden, miteinander verbunden, ein geschlossenes Sitzmodul, dessen Auslegung gestattet, mit einer minimalen Anzahl zusätzlicher Gestellelemente die Anbindung an die Fahrzeugstruktur zu realisieren. Insbesondere entfallen Konstruktionselemente, die zur Montage von Sitz- und Lehnensegmenten dienen.

Die Formgebung des Sitzmoduls im Querschnitt stellt bereits das ergonomisch erforderliche Profil für einen Fahrzeugsitz dar. Verschiedene Höhen der Rückenlehne und verschiedene Sitztiefen werden durch Einfügen von Zwischenprofilen realisiert.

Die Hohlprofile sind in Längsrichtung des Sitzes, also parallel zur Sitzvorderkante, angeordnet, um als miteinander form-, kraft- oder stoffschlüssig verbundene Einzelträger den Festigkeitsverband zu sichern. Die Längsanordnung ermöglicht eine größere Spannweite zwischen den Stützelementen. Der innere Aufbau der Hohlprofile ist entsprechend der Festigkeitsanforderungen gestaltet, insbesondere so, daß die durch die Biegebelastungen im Querschnitt auftretenden Schubspannungen in beiden Belastungsrichtungen zuverlässig begrenzt werden. Alle Hohlprofile gemeinsam, die in oben angegebener Form montiert sind, bilden eine räumliche Schalenkonstruktion, die in der Lage ist, die auftretenden Belastungen auf die Stützelemente abzuleiten. Durch diese Anordnung wird auch die Überbrückung der für einen Mehrfachsitz benötigten Stützweite gesichert. Insbesondere entfallen die bisher in der Regel erforderlichen Querträger zur Aufnahme des Sitzmoduls. Die offenen Stirnseiten werden durch Abdeckungen geschlossen, deren Befestigung im Inneren der Hohlkammerprofile vorgenommen wird.

Zur Realisierung größerer Gesamtsitzbreiten kann das Sitzmodul an beliebiger Stelle unterstützt werden. Durch den inneren Aufbau ermöglicht, benötigt das Sitzmodul keine expliziten Befestigungszonen.

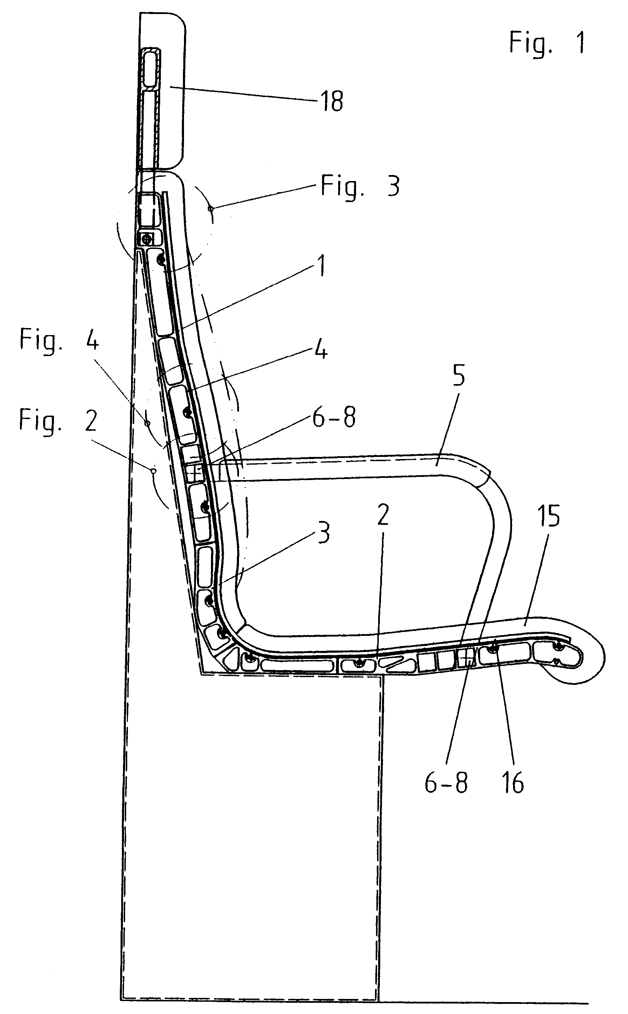

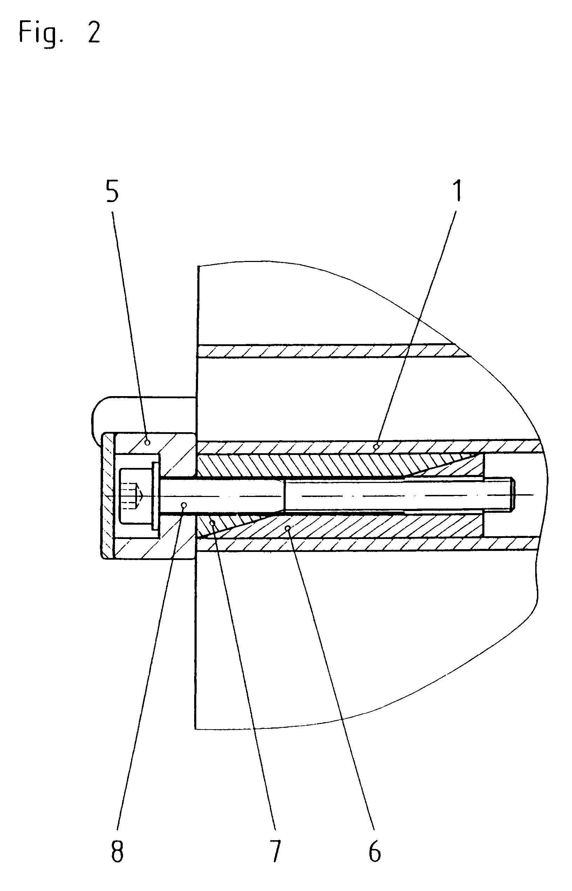

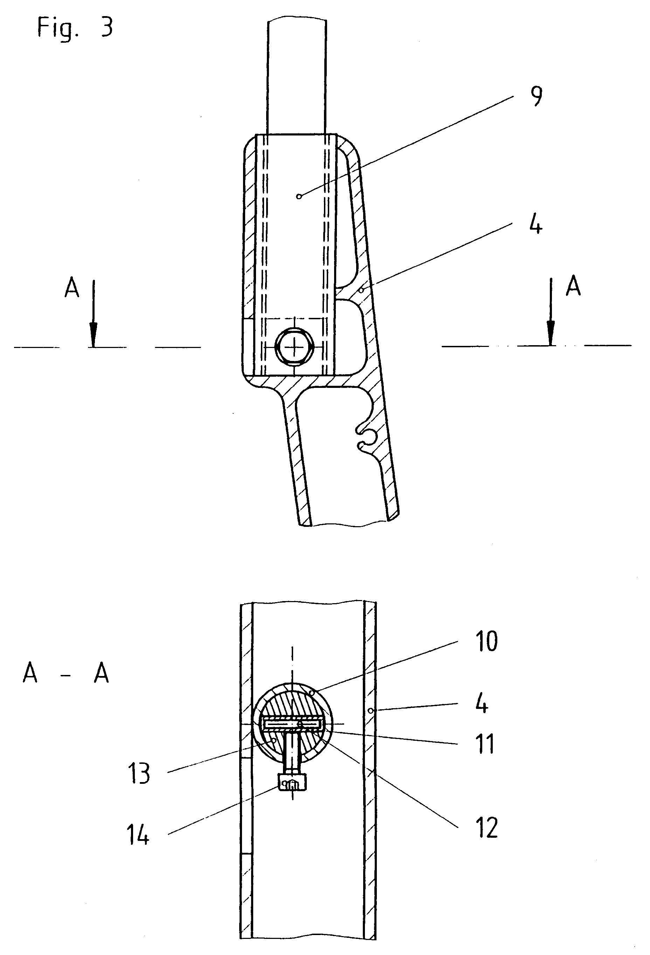

Die Hohlkammern bieten ebenso Gelegenheit, Komplettierungsteile wie Armlehnen, Kopfstützen und Handgriffe zu befestigen. Grundsätzlich werden erfindungsgemäß zwei Varianten unterschieden: einmal sind die Verbindungselemente parallel zu den Hohlkammerstegen angeordnet (Fig.2), bei der zweiten Variante werden die Hohlkammerstege durch die Verbindungselemente geschnitten (Fig.3).

Bei der Variante 1, die zur Befestigung der Armlehne dient (Fig.2), sind die Verbindungselemente parallel zu den Hohlkammerwänden eingebaut. Im Modulquerschnitt werden bei der Fertigung in verschiedenen Hohlkammerprofilen Hohlkammern erzeugt, deren Abmessungen mit denen von Vollprofilen übereinstimmen. Die Verbindungselemente sind zwei Keilsegmente 6 und 7, die mittels einer Spannschraube 8 gegen die Hohlkammerstege verspannt werden. Dadurch wird die Lage der Armlehne 5 eindeutig fixiert. Durch Variation der Längenabmessungen der Keilsegmente 6 und 7 stellt die vorgeschlagene Lösung eine Methode dar, die Krafteinleitung über eine entsprechend der Beanspruchung gewählten Fläche zu realisieren. Dadurch entfällt ein früher erforderlicher Hilfsrahmen, da das Sitzmodul direkt zur Kraftaufnahme herangezogen wird.

Variante 2 stellt die Methode dar, um eine Kopfstütze 18 oder auch einen Handgriff am Sitzmodul zu befestigen (Fig. 3). Dabei schneiden Verbindungselemente Hohlkammerstege. Ein Verbindungselement 9 besteht aus einer zylindrischen Hülse 10, in der stoffschlüssig durch Verklebung und formschlüssig ein Vierkantrohr 11 eingesetzt ist. In dieses Vierkantrohr 11 wird ein Flachstab 12 aus Federstahl eingeschoben, der mit dem Komplettierungselement 18 verbunden ist. Die Arretierung des Flachstabes 12 wird durch die Klemmung im Vierkantrohr 11 mittels Spannschraube 13 und Anschlag 14 gewährleistet. Die zylindrische Hülse 10 verteilt die aufzunehmenden Kräfte auf mehrere Hohlkammerstege. Der zylindrische Querschnitt des Verbindungselementes gewährleistet die wirtschaftliche Fertigung der Durchbrüche in den Hohlkammerwänden.

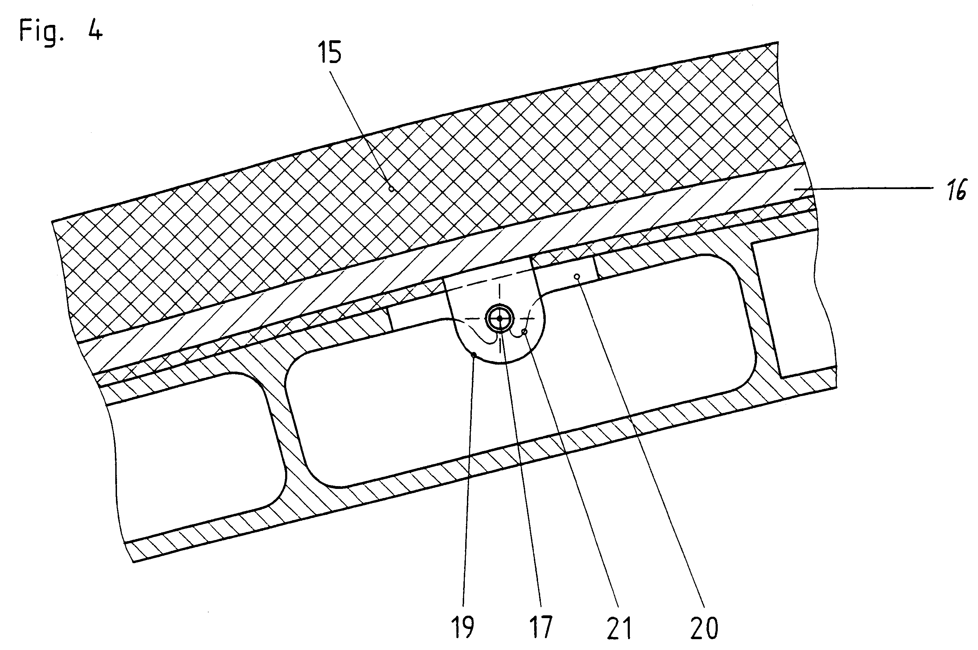

Die Befestigung der Polsterteile am Sitzmodul beschreibt Fig.4. Im Polsterelement 15 der Sitz- bzw. der Rückenlehnensegmente 2, 3 und 4 werden umlaufende Verstärkungen 16 in der Weise eingebaut, daß rechtwinklig von der Polsterunterseite abstehende Laschen 19 mit Bohrungen aus der Polsterkontur herausragen. Die Laschen 19 greifen in Schlitze 20 ein, die sich in der Polsterauflagefläche 15 des Sitzmoduls befinden. Die Schlitze 20 durchbrechen die Wände von Hohlkammerprofilen und damit auch an deren Innenseiten befindliche Formelemente zum Einschieben von Befestigungsstäben 17. Diese eingeschobenen Befestigungsstäbe 17 arretieren die Laschen 19 der Polsterverstärkung 16 innerhalb der Hohlkammerprofile. Die Hohlkammern werden zuletzt durch Abdeckungen auf den Stirnseiten verschlossen, so daß die Befestigungselemente nicht ohne weiteres zugängig sind. Die vorgeschlagene Lösung ersetzt so eine Vielzahl von außen zugängiger Befestigungselemente für die Polsterbefestigung.

## Patentansprüche

1. Sitz, insbesondere Fahrzeugsitz für öffentliche Verkehrsmittel, bestehend aus einem Sitzmodul (1), welches durch teilweise oder vollständig form-, und/oder kraft- und/oder stoffschlüssig miteinander verbundene Sitz- und Lehnensegmente gebildet wird, sowie Armlehnen und Kopfstützen, wobei das Sitzmodul (1) ein Sitz- und Lehnensegmente beinhaltendes Konstruktionselement in variablen Breitenabmessungen ist, welches aus Leichtmetallegierungen oder Kunststoffen besteht, dadurch gekennzeichnet, daß
- das Sitzmodul (1) über die gesamte Tiefe der Sitz- und Lehnensegmente aus zwei oder mehreren, im inneren durch Stege und Verstärkungen ausreichend versteiften, parallel zur Sitzvorderkante verlaufenden Hohlprofilteilen (2, 3, 4) besteht, wobei das Sitzmodul (1) über die gesamte Einzel- oder Mehrfachsitzbreite freitragend ist, die offenen Stirnseiten des Sitzmoduls durch Abdeckungen geschlossen werden und das Sitzmodul an einem oder beiden Seitenenden abgestützt ist.

2. Sitz nach Anspruch 1 mit größerer Stützweite, dadurch gekennzeichnet, daß das Sitzmodul (1) zusätzliche Stützen besitzt.

3. Sitz nach den Ansprüchen 1 und 2 mit zur Befestigung von Armlehnen (5) dienenden Verbindungselementen, dadurch gekennzeichnet, daß
die Verbindungselemente keilförmige Segmente (6,7) sind, die sich in den Hohlkammern des Sitzmoduls (1) befinden und mittels Spannschraube (8) gegen die Hohlkammerstege verspannt sind, wobei die Verbindungselemente parallel zu den Hohlkammerwänden liegen.

4. Sitz nach den Ansprüchen 1 bis 3 mit zur Befestigung von Kopfstützen (8) dienenden Verbindungselementen, dadurch gekennzeichnet, daß
ein Verbindungselement (9) aus einem zylindrischen Rohr (10) besteht, in das ein Vierkantrohr (11) eingesetzt ist, welches eine Federstahllamelle (12) aufnimmt, wobei das Verbindungselement die Hohlkammerwände schneidet und die Federstahllamelle mittels Spannschraube (14) und Anschlag (13) geklemmt wird.

5. Sitz nach den Ansprüchen 1 bis 4, mit zur Befestigung von Polsterteilen (15) dienenden Konstruktionselementen, dadurch gekennzeichnet, daß
am Polsterteil (15) ein Verstärkungsrahmen (16) mit rechtwinklig zur Polstergrundfläche vorstehenden Laschen (19) angebracht ist, die durch Schlitze (20) in die Hohlkammern der Profile des Sitzmoduls (1) hineinragen, die Laschen (19) werden durch Stäbe (17) gehalten, die in auf den Hohlkammerinnenseiten angebrachten Formelementen (21) geführt werden, die Stäbe (17) werden beim Verschluß des Sitzmoduls (1) durch seitliche Abdeckungen verdeckt.

## Claims

1. Seat, in particular a seat for public-passenger transport vehicles, comprising a seat module (1) formed by seat and backrest segments connected together partly or entirely in a positive and/or frictional and/or materially-engaged manner, and armrests and headrests, the seat module (1) being a constructional member including seat and backrest segments in variable width dimensions, which consists of lightweight metal alloys or plastics, characterised in that
- the seat module (1) comprises, over the entire depth of the seat and backrest segments, two or a plurality of hollow profile parts (2, 3, 4) sufficiently reinforced in the interior by webs and reinforcements and extending parallel to the forward edge of the seat, in a freely supported manner over the entire width of the individual or multiple seat, the open end faces of the seat module being closed by covers, and being supported at one or both of the two lateral ends.

2. A seat as claimed in claim 1 with a greater support width, characterised in that the seat module (1) has additional supports.

3. A seat as claimed in claims 1 and 2 with connector members used for the attachment of armrests (5), characterised in that the connector members are wedge-shaped segments (6, 7) which are located in the cavities of the seat module (1) and are clamped against the cavity webs by means of a clamp screw (8), with the connector members lying parallel to the walls of the cavity.

4. A seat as claimed in claims 1 to 3 with connector members used for the attachment of headrests (8), characterised in that a connector member (9) comprises a cylindrical tube (10) into which there is inserted a rectangular-section tube (11), which accommodates a spring steel blade (12), with the connector member intersecting the cavity walls and the spring steel blade being clamped by means of a clamp screw (14) and stop (13).

5. A seat as claimed in claims 1 to 4 with constructive members used for the attachment of upholstered parts (15), characterised in that there is attached to the upholstered portion (15) a reinforcing frame (16) with lugs (19) projecting at right angles to the base surface of the upholstery, said lugs projecting inwards through slots (20) into the cavities of the profiles of the seat module (1), with the lugs (19) being held by rods (17) which are guided on moulded members (21) attached to the inner sides of the cavity and the rods (17) being covered by lateral covers when the seat module (1) is closed.

## Revendications

1. Siège, notamment siège de véhicule destiné aux moyens de transport publics, constitué d'un siège modulaire (1) formé par des éléments de siège et de dossier reliés partiellement ou complètement l'un à l'autre d'une façon à engagement positif de forme et/ou de matière et/ou par adhérence, et d'accoudoirs et d'appuis-tête, le siège modulaire (1) étant un élément de construction qui comprend des éléments de siège et de dossier, dont les dimensions en largeur peuvent varier et qui est réalisé dans des alliages légers ou des matières plastiques, caractérisé en ce que, sur toute la profondeur des éléments de siège et de dossier, le siège modulaire (1) est constitué de deux ou plusieurs sections de profil creux (2, 3, 4) parallèles au bord avant du siège et suffisamment rigidifiées à l'intérieur au moyen d'entretoises et de renforts, alors que le siège modulaire (1) est en porte à faux sur toute la largeur du siège à une ou plusieurs places, ses fronts ouverts sont fermés par des éléments de recouvrement et qu'il est soutenu à la hauteur de l'une ou des deux extrémités latérales.

2. Siège selon la revendication 1, présentant une plus grande distance entre appuis, caractérisé en ce que le siège modulaire (1) est pourvu d'appuis supplémentaires.

3. Siège selon les revendications 1 et 2, présentant des attaches destinées à la fixation d'accoudoirs (5), caractérisé en ce que
ces attaches sont des éléments (6,7) de forme conique situés dans les cavités creuses du siège modulaire (1) et croisillonnés contre les entretoises de ces cavités au moyen d'une vis de serrage (8) et sont disposées parallèlement aux parois de ces cavités creuses.

4. Siège selon les revendications 1 à 3, présentant des attaches destinées à la fixation d'appuis-tête (8), caractérisé en ce
qu'une attache (9) est constituée d'un tube cylindrique (10) dans lequel est disposé un tube à quatre pans (11) contenant une lamelle en acier à ressorts (12), l'attache coupant les parois des cavités creuses et la lamelle en acier à ressorts (12) étant bloquée au moyen d'une vis de serrage (14) et d'une butée (13).

5. Siège selon les revendications 1 à 4, présentant des éléments de construction destinés à la fixation de coussins (15), caractérisé en ce
qu'on a pourvu le coussin (15) d'un cadre de renforcement (16) présentant des colliers (19) faisant saillie à angle droit par rapport à la surface du coussin, lesquels pénètrent dans les cavités creuses des profilés du siège modulaire (1) par des fentes (20) et sont maintenus par des tiges (17) guidées dans les profilés (21) situés sur les parois intérieures des cavités creuses, des éléments de couverture latéraux recouvrant ces tiges (17) au moment de la fermeture du siège modulaire (1).
